**Europäisches Patentamt**

**European Patent Office**

**Office européen des brevets**

(19)

(11) Veröffentlichungsnummer : **0 089 577**
**B1**

# (12) EUROPÄISCHE PATENTSCHRIFT

(45) Veröffentlichungstag der Patentschrift :
21.11.85

(21) Anmeldenummer : 83102410.4

(22) Anmeldetag : 11.03.83

(51) Int. Cl.⁴ : **H 02 P 6/02, H 02 P 7/00**

(54) Kollektorloser Gleichstrommotor mit einem Permanentmagnet-Rotor.

(30) Priorität : 15.03.82 DE 3209392

(43) Veröffentlichungstag der Anmeldung :
28.09.83 Patentblatt 83/39

(45) Bekanntmachung des Hinweises auf die Patenterteilung : 21.11.85 Patentblatt 85/47

(84) Benannte Vertragsstaaten :
AT CH FR IT LI SE

(56) Entgegenhaltungen :
DE-A- 2 529 524
ELEKTRONIK, Band 29, Nr. 20. Oktober 1980, Seiten 67-71, München, DE., R. HANITSCH et al.: "Bürstenloser Gleichstrommotor digital geregelt"

(73) Patentinhaber : Georg Schick Dental GmbH
Lehenkreuz 12
D-7957 Schemmerhofen (DE)

(72) Erfinder : Schaub, Gerhard
Albecker Steige 91
D-79000 Ulm/Donau (DE)

(74) Vertreter : Dziewior, Kurt, Dr.-Ing.
Hermann Stehr-Weg 21
D-7900 Ulm/Donau (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen kollektorlosen Gleichstrommotor mit einem Permanentmagnet-Rotor, der in einem Bereich zwischen etwa 4 000 und 40 000 Umdrehungen pro Minute regelbar sein soll. Solche Motoren werden für vielerlei Zwecke, beispielsweise in der Dentaltechnik eingesetzt, wo man in erster Linie Schleifmotoren mit regelbaren hohen Drehzahlen benötigt. Die hohen Drehzahlen sind deshalb erforderlich, weil sehr harte Materialien mit Schleifkörpern kleinen Durchmessers zu schleifen sind, beispielsweise Zahnersatz, wie er in Zahnlaboratorien verarbeitet wird.

Außer der Einstellbarkeit innerhalb eines großen Drehzahlbereiches wird von solchen Motoren noch verlangt, daß die gewünschte Drehzahl unabhängig von irgendwelchen Störgrößen, z. B. Lastschwankungen, konstant bleibt. Dazu ist aber eine Regelung erforderlich, die auftretende Laständerungen und Spannungsänderungen kompensiert.

Kollektorlose Gleichstrommotoren mit einem Permanentmagnet-Rotor und einer feststehenden, mehrpoligen Statorwicklung mit mehreren, räumlich gleichmäßig am Umfang versetzten Wicklungssträngen, für deren nacheinander erfolgende impulsförmige Bestromung durch eine Gleichspannungsquelle eine digitale Ansteuerschaltung vorgesehen ist, gehören zum Stand der Technik. Die bekannten Ansteuerschaltungen unterscheiden sich voneinander im wesentlichen in der Art der Erfassung der Rotorstellung.

Gemäß der DE-OS 30 12 833 wird laufend die jeweilige Rotorstellung aus den von dem sich drehenden Rotor in den Wicklungssträngen induzierten Spannungen ermittelt ; die Bestromung erfolgt mit jeweils einem einzigen Impuls verstellbaren Stromflußwinkels innerhalb eines vorgegebenen, symmetrisch zum Scheitelpunkt der in der Ständerwicklung induzierten Wechselspannung liegenden Winkelbereiches und ferner ist ein die Verstellung des Stromflußwinkels ermöglichender Regelkreis vorgesehen.

Der Nachteil dieser bekannten Schaltung besteht darin, daß bei Verstellung des Stromflußwinkels die Symmetrie zum Scheitelpunkt nicht mehr eingehalten wird, da der Impuls verzögert beginnt, aber nicht vorzeitig endet.

Durch die DE-A-2 529 524 ist weiterhin eine Schaltung zur Drehzahlregelung eines kollektorlosen Gleichstrommotors mit Permanentmagnetrotor mittels Stromflußwinkelverstellung (Pulslängensteuerung) bekannt, bei der ein die Verstellung des Stromflußwinkels ermöglichender Drehzahl-Regelkreis vorgesehen ist, der zur Impulssymmetrierung von Nulldurchgangsschaltungen gesteuerte Zählschaltungen aufweist.

Diese bekannte Schaltung enthält insgesamt vier Zähler sowie eine Vergleichsschaltung zum Vergleich der Zählerstände und ist daher sehr aufwendig. Darüber hinaus sei darauf hingewiesen, daß marktgängige Mikro-Controller maximal zwei Zähler enthalten, so daß diese für die erwähnte bekannte Schaltung ohne Erweiterung nicht brauchbar sind.

Der Erfindung liegt die Aufgabe zugrunde, die Schaltung nach dem Gattungsbegriff des Anspruches 1 gegenüber der erwähnten bekannten Schaltung zu vereinfachen.

Zur Lösung dieser Aufgabe soll das Stellglied des Regelkreises einen ersten Vor-Rückwärtszähler enthalten, der ab Impulsbeginn mit konstanter Frequenz von Null beginnend vorwärtszählt, ab Scheitelpunkt der in dem bestromten Wicklungsstrang induzierten Spannung von dem erreichten Zählerstand ausgehend mit gleicher Frequenz rückwärtszählt und bei Zählerstand Null den Strom abschaltet und ferner einen zweiten, mit einer konstanten Frequenz beaufschlagten, nach Wiedererreichen des Zählerstandes Null des ersten Zählers anlaufenden und somit Anfang und Ende der Impulspause festlegenden Zähler, dessen Zähldauer voreingestellt und von der digital ermittelten Drehzahlabweichung des Rotors vom Sollwert abhängig ist.

Anstelle den ersten Vor-Rückwärtszähler mit Null beginnen und wieder bei Null enden zu lassen, kann man im Rahmen der Erfindung auch einen Zähler verwenden, der die Zählung bei einem von Null verschiedenen Ausgangswert beginnt und an diesem Ausgangswert wieder beendet.

Diese Art der Regelung der Impulsbreite der den einzelnen Wicklungssträngen zugeführten Stromimpulse bewirkt ebenfalls, daß der Motor stets mit optimalem Wirkungsgrad arbeitet, wenn die Impulse symmetrisch zum Scheitel der in dem Wicklungsstrang induzierten Spannung liegen. Außer dem Vorteil des wesentlich einfacheren Schaltungsaufbaus besitzt die erfindungsgemäße Art des Zählereinsatzes aber noch den weiteren Vorteil, daß die Impulssymmetrierung innerhalb einer Impulsdauer und damit ohne zeitliche Verzögerung erfolgt.

Bei der erfindungsgemäßen Ansteuerschaltung, bei der während der Drehzahlregelung des Motors die Bestromungsimpulse mit Hilfe von zwei digitalen Zählern stegs symmetrisch zum Scheitel der in dem Wicklungsstrang induzierten Spannung gehalten werden, können Schwierigkeiten auftreten, wenn eine lastunabhängige Drehzahlregelung des Motors über einen großen Drehzahlbereich, beispielsweise einen solchen von etwa 1 : 10, gefordert wird. Eingangs wurde ja darauf hingewiesen, daß der erfindungsgemäße kollektorlose Gleichstrommotor in einem sehr großen Bereich, etwa in einem Bereich zwischen 4 000 und 40 000 Umdrehungen pro Minute lastunabhängig regelbar sein soll. Würde man von vorn herein an die Wicklungsstränge des Motors eine Versorgungsspannung anlegen, welche in ihrer Größe der maximalen Umdrehungszahl des Motors entspricht, so müßte der Stromflußwinkel der Versorgungsspannung umso kleiner eingestellt werden, je niedriger die gewünschte Umdrehungszahl des Motors ist. Das würde einerseits bedeuten, daß die Wicklungsstränge bei niedriger Drehzahl während extrem kurzer Impulszeiten mit sehr hohem Strom beaufschlagt würden, der aus der großen Spannungsdifferenz zwischen Versorgungsspannung und gegeninduzierter EMK folgt. Andererseits bestünde die Gefahr, daß die für niedrige Drehzahlen seitens der digitalen Zähler ein- und auszuschaltenden sehr kurzzeitigen Impulse nicht mehr eindeutig reproduzierbar sind, weil diese Zähler nur in ganzen Schaltstufen schalten können.

Um diesen Schwierigkeiten zu begegnen, empfiehlt es sich, die Ansteuerschaltung so auszubilden, daß durch eine Grobregelung die Amplitude der Versorgungsspannung der in den Wicklungssträngen induzierten Spannung angepaßt wird ; d. h. die Versorgungsspannung wird beispielsweise in groben Stufen entsprechend der eingestellten Umdrehungszahl des Motors geregelt. Man kann dazu einen weiteren Regelkreis vorsehen, über den die Versorgungsspannung an den beiden Ladekondensatoren der über ein Netzgerät erhaltenen Gleichspannungsquelle durch Phasenanschnitt der Sekundärwechselspannung des Netztransformators mittels zweier Triacs regelbar ist.

Der Sollwert dieser Spannung wird proportional zur Motordrehzahl vorgegeben, beim vorliegenden digitalen Verfahren in Stufen, und durch einen Regelkreis unabhängig vom Strom konstant gehalten. Durch diese Grobeinstellung der Spannung ist es einerseits möglich, die Spitzenströme in den Wicklungssträngen und Schaltern auf beherrschbare Werte zu begrenzen, andererseits werden extrem kurze Impulse und damit die oben erwähnten Schwierigkeiten beim Schalten dieser Impulse mit den digitalen Zählern vermieden.

Zusätzlich weist die Spannungsversorgung im Ausgang des Spannungsstellers zweckmäßig eine Entladeschaltung auf, welche im Falle einer Verringerung der Motor-Solldrehzahl die Ladekondensatoren der Gleichspannungsquelle kurzzeitig entlädt. Bei schneller Herabregelung der Drehzahl würden nämlich die Zeitkonstanten der Ladekondensatoren eine in diesem Fall notwendige schnelle Entladung der Ladekondensatoren verhindern ; daher ist die zusätzliche Entladeschaltung erforderlich.

Der erwähnte Regelkreis der Ansteuerschaltung weist zweckmäßig noch eine weitere Besonderheit auf. Er soll nämlich derart ausgebildet sein, daß er zur Vermeidung zu starker Motorerwärmung die Abschaltung des Motors bewirkt, sobald der Stromflußwinkel einen vorgegebenen Wert eine vorgegebene Zeit lang überschreitet. Zu diesem Zweck wird bei jeder Motorumdrehung ein Zähler inkrementiert, wenn das Verhältnis von Impulsbreite zu Pause einen vorgegebenen Wert (z. B. 2 : 1) überschreitet. Erreicht der Zählerstand einen zur Motordrehzahl proportionalen Grenzwert, so wird Motorüberlastung signalisiert und der Motor stillgesetzt. Durch Wahl der Proportionalitätskonstanten kann eine Anpassung des Abschaltzeitpunkts an die thermischen Werte des Motors vorgenommen werden. Bei Umdrehungen, bei denen das vorgegebene Verhältnis Impulsbreite zu Pause nicht überschritten wird, wird der Zähler entsprechend dekrementiert. Mit dem Proportionalitätsfaktor für die Dekrementierung kann der Abschaltzeitpunkt an die Abkühlungszeitkonstante des Motors angepaßt werden. Um auch die Abkühlung des Motors während Stillstandszeiten zu berücksichtigen, wird genannter Zähler während dieser mit einer konstanten, an die Abkühlungszeitkonstante des Motors angepaßten Frequenz dekrementiert. Zur Sicherstellung eines Wiederanlaufs des Motors nach Überlastung wird obiger Zähler nach Abschaltung um eine konstante Zahl erniedrigt, die zweckmäßigerweise klein ist gegenüber dem Abschaltgrenzwert. Auf diese Weise werden kurzzeitige Motorüberlastungen, welche zur Abschaltung des Motors führen würden, durch folgende Zeiten, in denen der Motor normal oder unterbelastet ist, kompensiert. Es wird also automatisch eine Kontrolle von auftretenden Motorüberlastungen durchgeführt, ohne daß der Motor bei jeder kurzzeitigen Überlastung sofort abgeschaltet wird. Gerade in dem eingangs erwähnten Anwendungsfall der Benutzung solcher Motoren in der Dentaltechnik hat diese wesentliche Verbesserung eine besondere Bedeutung, weil solche kurzzeitigen Motorüberlastungen bei dieser Anwendung laufend auftreten.

Wenngleich zur Durchführung der Erfindung lediglich entsprechend ausgebildete Digitalschaltungen erforderlich sind, erscheint es jedoch zweckmäßig, die diesen Digitalschaltungen übertragenen Aufgaben von einem Mikroprozessor wahrnehmen zu lassen, der in die Ansteuerschaltung eingebaut ist. Dieser Mikroprozessor, der die erwähnten Zähler enthält, führt also aufgrund der durchgeführten Lageermittlung des Rotors das Schalten der Wicklungsstränge, die Entladung der Ladekondensatoren der Gleichspannungsquelle, die Regelung der Versorgungsspannung, die Regelung des Stromflußwinkels der Motorimpulse sowie das Abschalten des Motors bei Überlast durch. Die beschriebenen Zähler sind in der Regel durch Register oder Timer des Mikroprozessors gebildet.

In diesem Zusammenhang sei darauf hingewiesen, daß der Einsatz von Mikroprozessoren zur Signalverarbeitung in Antriebsregelungen aus « Regelungstechnische Praxis », 1978, Seiten 355 ./. 359 an sich bekannt ist.

Ein Ausführungsbeispiel für einen erfindungsgemäßen Schaltungsaufbau ist in den Zeichnungen dargestellt.

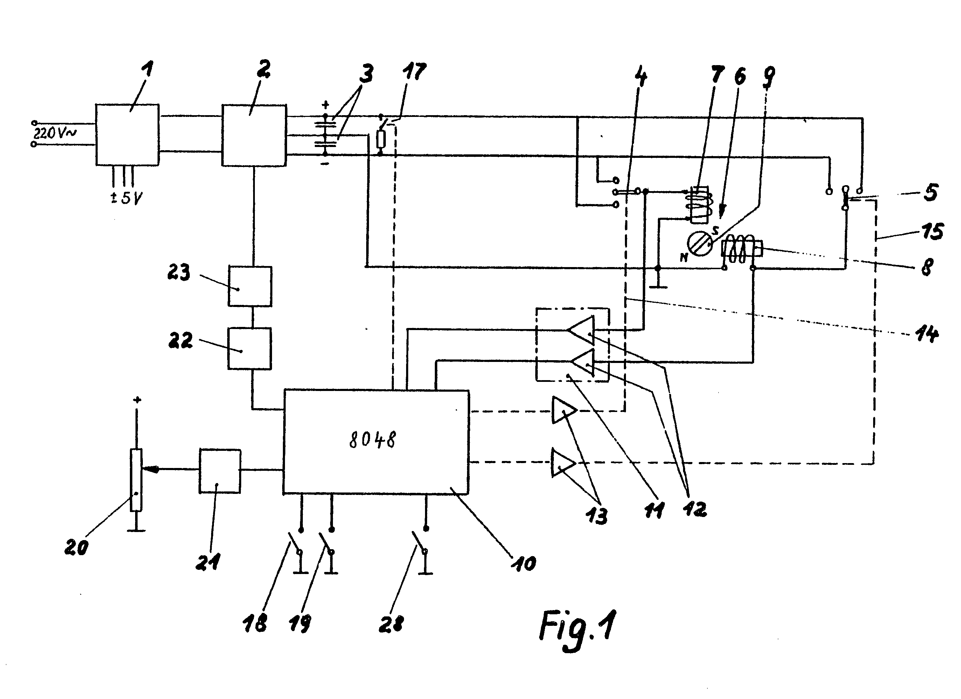

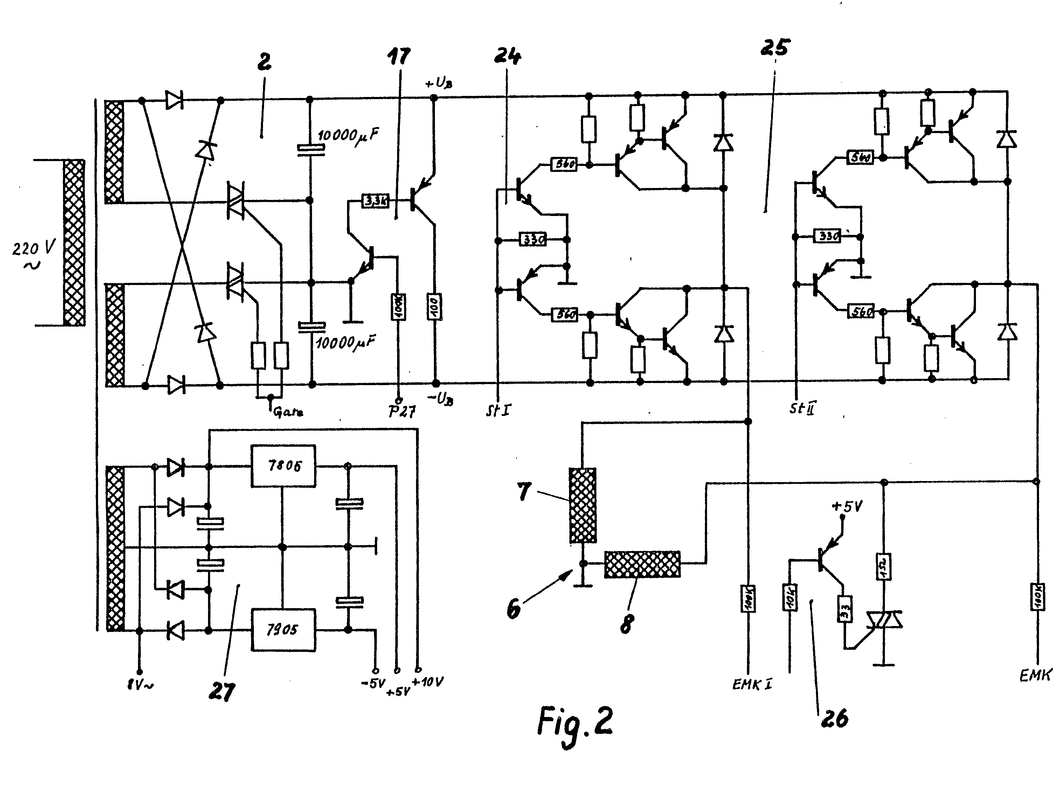

In Fig. 1 ist das Prinzip der erfindungsgemäßen Ansteuerschaltung in einem Blockschaltbild wiedergegeben. Fig. 2 zeigt den Schaltungsaufbau des Netzgerätes mit dem Spannungssteller, dem Schaltungsteil für die Entladung der Ladekondensatoren, den Treiberstufen, den in Darlington-Schaltung aufgebauten Leistungsschaltern, dem Spannungsregler für die Versorgungsspannungseinrichtung des Mikroprozessors sowie der Operationsverstärker und einer Bremseinrichtung für den Motor.

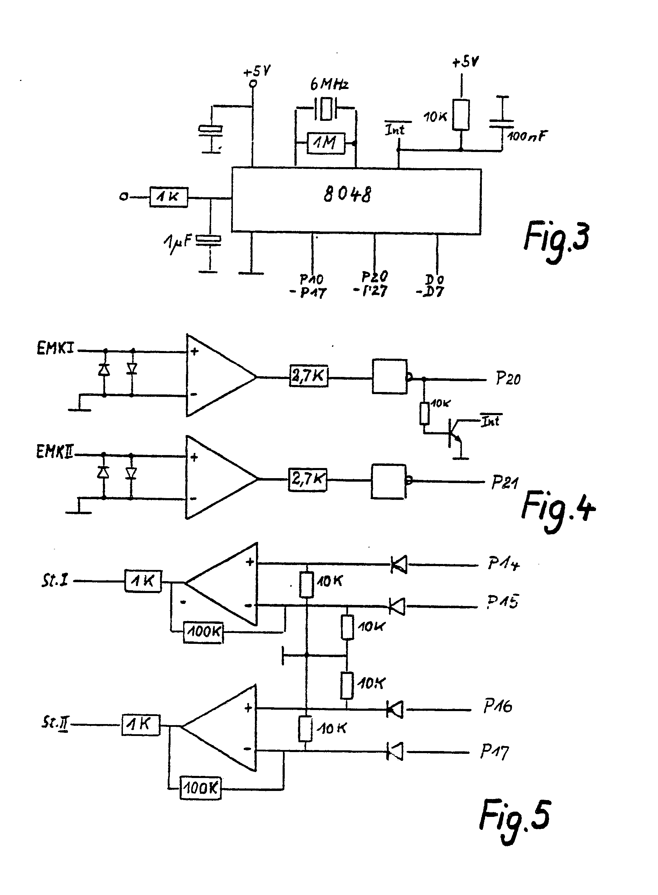

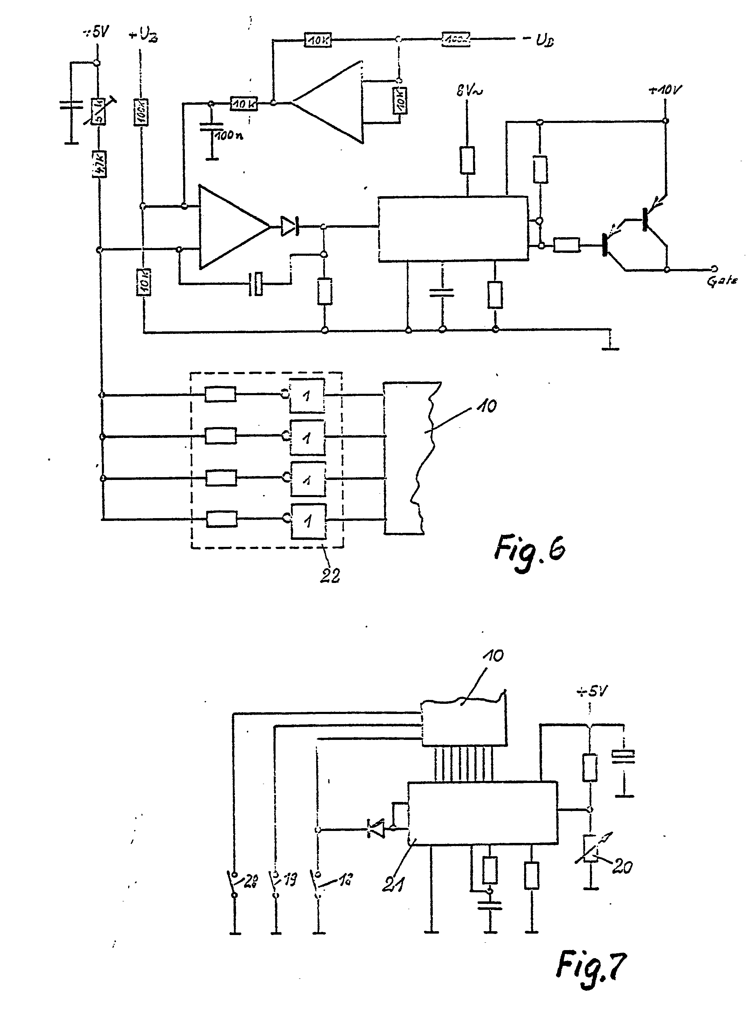

In den Fig. 3 bis 7 sind die detaillierten Schaltbilder für den Mikroprozessor, für die Nulldurchgangsschalter, für die Steuerimpulsgewinnung zur Wicklungseinschaltung, die Triacsteuerung sowie für die Drehzahlregelung gezeichnet.

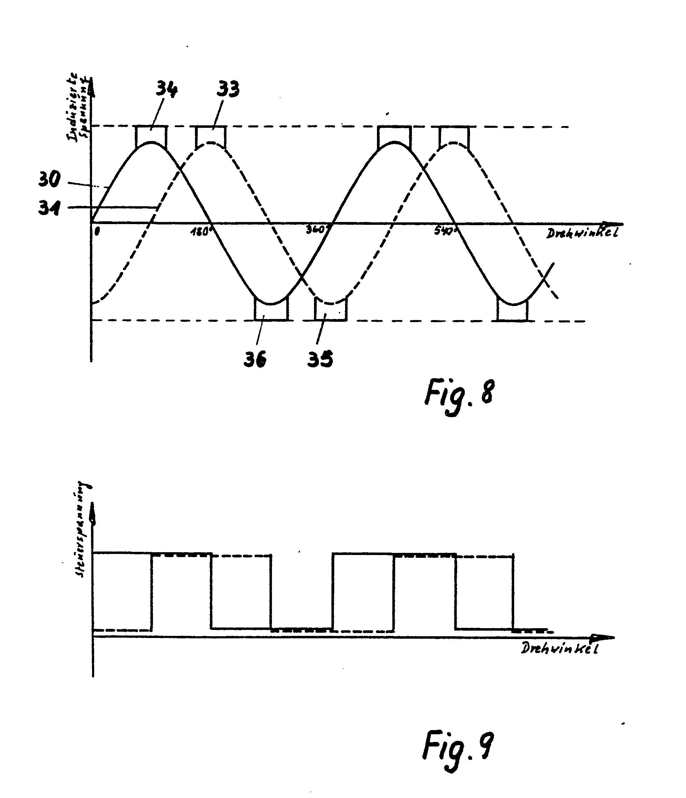

Schließlich zeigen die Diagramme der Fig. 8 und 9 die Aufbereitung der in den Wicklungssträngen während der Stromflußpause induzierten Spannungen.

Anhand der Fig. 1 soll zunächst der prinzipielle Aufbau der Ansteuerschaltung gemäß der Erfindung erläutert werden. Die Schaltung enthält ein Netzgerät 1, welches an eine Wechselspannungsquelle von 220 V anschließbar ist. Dieses Netzgerät besitzt zwei Ausgänge ; der eine führt zu dem Spannungssteller 2, der andere liefert die für die Operationsverstärker und den Mikroprozessor benötigten Gleichspannungen von ± 5 V und 10 V.

In dem Spannungssteller 2 werden auf die noch näher zu kennzeichnende Weise Gleichspannungen erzeugt, welche stufenweise, beispielsweise in dem Bereich zwischen 10 und 40 V einstellbar sind und dann an den Ladekondensatoren 3 anliegen. Diese an den Ladekondensatoren 3 stehende Versorgungsspannung wird über von einem Mikroprozessor 10 gesteuerte Schalter 4 und 5 an die Statorwicklungen 7 und 8 eines Motors 6 angelegt, welcher einen Permanentmagnet-Rotor 9 aufweist. Die Steuerung der Schalter 4 und 5, welche in Wirklichkeit als Halbleiterschalter ausgebildet sind, erfolgt seitens des Mikroprozessors 10 über die Verstärker 13 und die gestrichelten Leitungen 14 und 15.

Um mit einem Motor 5 auszukommen, der nur zwei räumlich unter 90° zueinander stehende Statorwicklungen 7 und 8 besitzt, weisen die Schalter 4 und 5 außer einer Mittelstellung zwei Endstellungen auf, über die die beiden Wicklungen 7 und 8 abwechselnd an die positive und die negative Versorgungsspannung gelegt werden.

Zur Steuerung dieser den Statorwicklungen 7 und 8 zugeführten Versorgungsspannungsimpulse im Sinne der Erzeugung eines Drehfeldes, welches die Drehung des Rotors 9 bewirkt, weist die Ansteuerschaltung eine Abfrageschaltung 11 auf, welche dem Mikroprozessor 10 über Nulldurchgangsschalter 12 die jeweilige Lage des Rotors 9 während seiner Umdrehung signalisiert. Entsprechend der an einem Potentiometer 20 eingestellten gewünschten Drehzahl, welche dem Mikroprozessor 10 über einen Analog-Digitalwandler 21 eingegeben wird, bewirkt der Mikroprozessor über einen Digital-Analogwandler 22 und eine Phasenanschnittschaltung 23 die Einstellung des Spannungsstellers 2 auf den der eingestellten Drehzahl entsprechenden Spannungswert. Der Spannungssollwert wird über vier Leitungen vom Mikroprozessor 10 an den Digital-Analogwandler 22 gegeben.

Vor dem Start des Motors kann zunächst mit Hilfe des Schalters 28 die Drehrichtung des Motors eingestellt werden, dann wird der Startschalter 18 eingelegt. Mit Hilfe der Abfrageschaltung 11 ist der Mikroprozessor in der Lage, das schnellstmögliche Einspringen des Motors in den gewünschten lagegesteuerten Betrieb zu bewirken.

Während also die Grobeinstellung der der gewünschten Drehzahl entsprechenden Versorgungsspannung in der Phasenanschnittschaltung 23 und zwei im Spannungssteller 2 enthaltene Triacs erfolgt, geschieht die Feinregelung durch eine vom Mikroprozessor 10 gesteuerte Verstellung des Stromflußwinkels.

Diese Regelung soll nun anhand der Schaubilder der Fig. 8 und 9 erläutert werden. In dem Diagramm der Fig. 8 ist über dem drehwinkel des Rotors die induzierte Spannung aufgetragen. Wenn man zunächst einmal von zwei Statorwicklungen ausgeht, wie sie in Fig. 1 dargestellt sind und wenn man zunächst davon absieht, daß diese beiden Statorwicklungen wechselweise an den Plus- und den Minuspol der Versorgungsspannung angeschlossen werden sollen, so werden bei Rotation des Rotors in diesen beiden Statorwicklungen Spannungen induziert, welche den sinusförmigen Kurvenverlauf 30 und 31 aufweisen. Die beiden Spannungen sind entsprechend dem von den beiden Statorwicklungen gebildeten Winkel um 90° phasenverschoben. Die Amplitude dieser induzierten Spannung ist naturgemäß linear abhängig von der jeweiligen Drehzahl des Rotors. Symmetrisch zum Maximum dieser induzierten Spannungen ist die Statorwicklung mit der impulsförmigen Versorgungsspannung beaufschlagt, deren Amplitude stets größer sein muß als die Amplitude der induzierten Spannungen 30 und 31, um auf den Rotor ein beschleunigendes Drehmoment auszuüben. Diese Stromimpulse sind in Fig. 8 mit 33 bis 36 bezeichnet.

Um zu erreichen, daß die Versorgungsspannungsimpulse 33 bis 36 bei ihrer Breitenregelung in Abhängigkeit von der gewünschten Drehzahl stets symmetrisch zum Scheitel der induzierten Spannungen 30 und 31 liegen, um auf diese Weise ein maximales Drehmoment und damit den besten Wirkungsgrad des Motors zu erzielen, weist die digitale Ansteuerschaltung einen Regelkreis auf, dessen Stellglied einen ersten Vor-Rückwärtszähler enthält, der ab Beginn des Impulses 34 mit konstanter Frequenz von Null beginnend hochzählt, ab dem Scheitelpunkt der sinusförmigen Induktionsspannung 30 mit gleicher Frequenz herunterzählt und bei Zählerstand Null den Impulsstrom abschaltet. In diesem Abschaltaugenblick des Impulsstromes 34 wird ein zweiter Zähler eingeschaltet, der mit einer ebenfalls konstanten Frequenz beaufschlagt ist und der eine Voreinstellung aufweist, die von der digital ermittelten Drehzahlabweichung des Rotors vom Sollwert verändert wird. Dieser Zähler läuft von seinem Einstellwert aus bis zum Wert Null und schaltet in diesem Augenblick den ersten Vor-Rückwärtszähler wieder ein, welcher in gleicher Weise wie anhand des Impulses 34 beschrieben, nunmehr den Start des Impulsstromes 33 veranlaßt.

Diese Regelschaltung bewirkt eine Feinregelung des Motors in Abhängigkeit von der eingestellten Solldrehzahl durch Veränderung des Stromflußwinkels, also der Impulsbreite der den Wicklungssträngen zugeführten Impulse.

Aus den in dem Diagramm der Fig. 8 dargestellten induzierten Spannungen werden nun über zwei Operationsverstärker (Fig. 4) die in Fig. 9 dargestellten logischen Positionssignale gebildet, welche der Kenntlichmachung der einzelnen Quadranten des Rotorumlaufes dienen. Diese Positionssignale werden dem Mikroprozessor zugeführt, der sie dann zur Steuerung der Stromimpulse benutzt.

Einzelheiten der erfindungsgemäßen Ansteuerschaltung ergeben sich aus den Fig. 2 bis 7, in welchen detaillierte Schaltbilder der einzelnen Stufen der Ansteuerschaltung wiedergegeben sind. Aus Fig. 2 ist zunächst der Spannungssteller 2 mit den beiden Triacs zu erkennen, ferner eine Entladeschaltung 17 für die beiden Ladekondensatoren, welche jeweils eine Kapazität von 10 000 μF haben und daher im Falle einer Verkleinerung der Solldrehzahl über die von dem Mikroprozessor angesteuerte Entladeschaltung entladen werden müssen, weil sie sich andernfalls zu langsam auf den geforderten, niedrigeren Spannungswert entladen würden.

Aus Fig. 2 sind weiterhin noch die Treiberstufen 24 sowie der Leistungsschalter 25 zu erkennen. Schließlich sind der eingangs bereits erwähnte zweite Teil des Netzgerätes, nämlich der Spannungsregler 27, zu erkennen, der zur Speisung der Operationsverstärker und des Mikroprozessors dient. Außerdem ist in Fig. 2 noch eine Schaltung 26 eingezeichnet, welche als Bremseinrichtung für den Motor dient.

In Fig. 3 ist das Schaltbild des Mikroprozessors der Type 8048 wiedergegeben, in Fig. 4 die Schaltung des oben erwähnten Nulldurchgangsschalters, in Fig. 5 der Schaltungsteil, über den die Steuerimpulse für die Wicklungseinschaltung den Treiberstufen zugeführt werden.

In Fig. 6 ist der Schaltungsteil herausgezeichnet, welcher die grobe Spannungsregelung durch Phasenanschnitt der Sekundärwechselspannung des Netztransformators mittels zweier Triacs bewirkt. Fig. 7 stellt schließlich ein Schaltbild für den Analog-Digitalwandler für den Drehzahlsollwert dar.

**Patentansprüche**

1. Kollektorloser Gleichstrommotor (6) mit einem Permanentmagnet-Rotor (9) und einer feststehenden, mehrpoligen Statorwicklung (7, 8) mit mehreren, räumlich gleichmäßig am Umfang versetzten Wicklungssträngen, für deren nacheinander erfolgende impulsförmige Bestromung durch eine Gleichspannungsquelle (2) eine digitale Ansteuerschaltung vorgesehen ist, in welcher

1. laufend die jeweilige Rotorstellung aus den von dem sich drehenden Rotor (9) in den Wicklungssträngen induzierten Spannungen (30, 31) ermittelt wird,

2. die Bestromung mit jeweils einem einzigen Impuls (33 bis 36) verstellbaren Stromflußwinkels innerhalb eines vogegebenen, symmetrisch zum Scheitelpunkt der in der Ständerwicklung (7, 8) induziertierten Wechselspannung (30, 31) liegenden Winkelbereiches, erfolgt,

3. ein die Verstellung des Stromflußwinkels ermöglichender Drehzahl-Regelkreis vorgesehen ist, der zur Impulssymmetrierung von Nulldurchgangsschaltungen (12) gesteuerte Zählschaltungen aufweist,

dadurch gekennzeichnet, daß das Stellglied des Regelkreises einen ersten Vor-Rückwärtszähler enthält, der ab Impulsbeginn mit konstanter Frequenz von Null beginnend vorwärtszählt, ab Scheitelpunkt der in dem bestromten Wicklungsstrang induzierten Spannung (30, 31) von dem erreichten Zählerstand ausgehend mit gleicher Frequenz rückwärtszählt und bei Zählerstand Null den Strom abschaltet und welches ferner einen zweiten, mit einer konstanten Frequenz beaufschlagten, nach Wiedererreichen des Zählerstandes Null des ersten Zählers anlaufenden und somit Anfang und Ende der Impulspause festlegenden Zähler enthält, dessen Zähldauer voreingestellt und von der digital ermittelten Drehzahlabweichung des Rotors (9) vom Sollwert abhängig ist.

2. Kollektorloser Gleichstrommotor nach Anspruch 1, dadurch gekennzeichnet, daß dieser Regelkreis derart ausgebildet ist, daß er die Abschaltung des Motors (6) bewirkt, sobald der Stromflußwinkel einen vorgegebenen Wert während einer vorgegebenen Zeit überschreitet.

3. Kollektorloser Gleichstrommotor nach Anspruch 1 und 2, dadurch gekennzeichnet, daß in der Ansteuerschaltung bei jeder Motorumdrehung ein Zähler inkrementiert wird, wenn das Verhältnis von Impulsbreite zu Impulspause einen vorgegebenen Wert (z. B. 2 : 1) überschreitet und daß dieser Zähler bei Motorumdrehungen, bei denen das vorgegebene Verhältnis von Impulsbreite zu Pause nicht überschritten wird, entsprechend dekrementiert wird.

4. Kollektorloser Gleichstrommotor nach Anspruch 3, dadurch gekennzeichnet, daß die Proportionalitätskonstante für den der Motordrehzahl proportionalen Abschalt-Grenzwert an die thermischen Werte des Motors (6) und der Proportionalitätsfaktor für die Dekrementierung des Zählers an die Abkühlungszeitkonstante des Motors (6) angepaßt sind.

5. Kollektorloser Gleichstrommotor nach Anspruch 1 bis 4, dadurch gekennzeichnet, daß die Ansteuerschaltung zwecks Ermöglichung einer Drehzahlregelung über einen Bereich von etwa 1 : 10 einen weiteren Regelkreis aufweist, über den die Versorgungsspannung an den beiden Ladekondensatoren (3) der über ein Netzgerät (1) erhaltenen Gleichspannungsquelle (2) durch Phasenanschnitt der Sekundärwechselspannung des Netztransformators mittels zweier Triacs (Fig. 2) regelbar ist.

6. Kollektorloser Gleichstrommotor nach Anspruch 1 bis 5, dadurch gekennzeichnet, daß die Ansteuerschaltung eine Entladeschaltung (17) enthält, welche im Falle einer Verringerung der Motor-Solldrehzahl die Ladekondensatoren (3) der Gleichspannungsquelle (2) kurzzeitig entlädt.

7. Kollektorloser Gleichstrommotor nach Anspruch 1 bis 6, dadurch gekennzeichnet, daß die Ansteuerschaltung einen Mikroprozessor (10) enthält, welcher aufgrund der Lageermittlung des Rotors (9) das Schalten der Wicklungsstränge (7, 8), die Entladung der Ladekondensatoren (3) der Gleichspannungsquelle (2), die Regelung der Versorgungsspannung, die Regelung des Stromflußwinkels der Motorimpulse sowie das Abschalten des Motors (6) bei Überlast bewirkt.

8. Kollektorloser Gleichstrommotor nach Anspruch 1 bis 7, dadurch gekennzeichnet, daß die Zähler des Stellgliedes des Regelkreises durch Register oder Timer des Mikroprozessors (10) gebildet sind.

**Claims**

1. Direct current motor (6), without commutator, with a permanent-magnet rotor (9), with a fixed multiple stator coil (7, 8) made up of a number of circumferentially equally placed coil windings, to which a linear impulse type flux is supplied from a direct current source (2) through a digital control circuit in which :

1. Can be continuously ascertained the rotor setting of the said revolving motor (9) caused by the induced current (30, 31) of the said coil windings ;

2. Results in the flow, with a single impulse (33 to 36) preset current flow angle, symmetrical to the peak position of the said fixed coil (7, 8) induced direct current lying angle position ;

3. A revolution control system is supplied, allowing the resetting of the current flow angle, which shows counter switching impulse symmetry of the null flow switch ;
characterised in that the regulation of said control system contains a first forward-return counter, which, from an impulse-begin null position counts forward with a constant frequency, and from peak position in the flow coil windings induced said current (30, 31), counts backwards again with the same frequency and, on reaching the null position, switches the current off, and contains a second counter which, also with a constant frequency, on the first counter reaching the null position, measures the start and end of the impulse period, and because it is preset to a certain time of the first counter, measures the variation of the digital revolutions of the said rotor (9) from the required value.

2. Direct current motor without commutator as defined in claim 1 characterised in that said control system is built such that the said switching-off of the said motor (6) is activated as soon as the said current flow angle exceeds a pre-defined value in a predefined time.

3. Direct current motor without commutator as defined in claims 1 and 2 characterised in that in the said control circuit is a counter that is incremented when the relationship of the impulse width of a motor revolution to the impulse pause, (e. g. 2 : 1) is exceeded and that it decrements whenever the relationship of the impulse width of the motor revolution to impulse pause is not exceeded.

4. Direct current motor without commutator as defined in claim 3 characterised in that the proportionality factor of the proportional switch-off value of the said motor (6) is dependent on the thermal value of the said motor (6) and that the proportionality factor of the decrementation of the said counter is adjusted to the cooling constant of the said motor (6).

5. Direct current motor without commutator as defined in claims 1 to 4 characterised in that said control circuits, because of the possibility of a revolution control in the range of about 1 : 10, possesses a further control system which controls, through two Triacs (2), the supply current to both supply condensators (3) received from the direct current source (2) via the network (1) by means of the phase cut-off of the secondary alternating current of the net transformers.

6. Direct current motor without commutator as defined in claims 1 to 6 characterised in that said control circuit contains a discharge switch (17) which, should the required revolutions of said motor be reduced, rapidly discharges the current from said load condensators (3) of said direct current source (2).

7. Direct current motor without commutator as defined in claims 1 to 6 characterised in that said control circuit contains a microprocessor (10) which, by assesing the position of the said rotor (9), controls the switching of said coil windings (7, 8), the discharge of said load condensators (3), the said direct current source (2), the control of the said supply current, the supply of said current flow angle of said motor impulse, as well as the switching-off of the said motor (6) on overload.

8. Direct current motor without commutator as defined in claims 1 to 7 characterised in that said setting member of said control switch counter is built up from a regulator or timer of the said microprocessor.

**Revendications**

1. Moteur à courant continu (6) sans collecteur, comportant un rotor à aimants permanents (9) et un enroulement statorique fixe multipolaire (7, 8) comportant plusieurs brins d'enroulement décalés uniformément dans l'espace sur la périphérie et pour l'alimentation impulsionnelle successive en courant desquels par une source de tension continue (2) il est prévu un circuit de commande numérique, dans lequel

1. en permanence la position respective du rotor est déterminée à partir des tensions (30, 31) induites par le rotor (9) en rotation dans les brins d'enroulement,

2. l'alimentation en courant s'effectue respectivement avec une seule impulsion (33 à 36) de l'angle réglable du flux de courant, à l'intérieur d'une plage angulaire prédéterminée symétrique par rapport à la pointe de la tension alternative (30, 31) induite dans l'enroulement statorique (7, 8),

3. il est prévu un circuit de réglage de la vitesse de rotation permettant de régler l'angle du flux de courant et qui comporte des circuits de comptage commandés de manière à réaliser la symétrisation d'impulsions de circuits d'annulation (12),

caractérisé en ce que l'organe de réglage du circuit de réglage contient un premier compteur progressif-régressif qui effectue un comptage progressif commençant à partir de zéro à partir du début de l'impulsion, avec une fréquence constante et effectue un comptage régressif à la même fréquence à partir de la pointe de la tension (30, 31), induite dans le brin d'enroulement alimenté en courant, à partir de l'étage de comptage atteint et débranche le courant pour l'état de comptage nul et qui contient en outre un second compteur chargé par une fréquence constante et démarrant une fois qu'est à nouveau atteint l'état de comptage nul du premier compteur et fixe par conséquent le début et la fin de la pause entre impulsions et dont la durée de comptage est préréglée et dépend de l'écart, déterminé de façon numérique, entre la vitesse de rotation du rotor (9) et la valeur de consigne.

2. Moteur à courant continu sans collecteur selon la revendication 1, caractérisé en ce que ce circuit de réglage est agencé de telle sorte qu'il déclenche le débranchement du moteur (6) dès que l'angle du flux de courant dépasse une valeur prédéterminée pendant un intervalle de temps prédéterminé.

3. Moteur à courant continu sans collecteur selon les revendications 1 et 2, caractérisé en ce que, dans le circuit de commande un compteur est incrémenté lors de chaque rotation du moteur lorsque le rapport de la largeur des impulsions à la pause entre impulsions dépasse une valeur prédéterminée (par exemple 2 : 1) et que ce compteur est décrémenté de façon correspondante lors de rotations du moteur, lors desquelles le rapport prédéterminé de la largeur des impulsions à la pause n'est pas dépassé.

4. Moteur à courant continu sans collecteur selon la revendication 3, caractérisé en ce que la constante de proportionnalité pour la valeur limite de débranchement, proportionnelle à la vitesse de rotation du moteur, est adaptée aux valeurs thermiques du moteur (6) et que le facteur de proportionnalité pour la décrémentation du compteur est adapté à la constante de temps de refroidissement du moteur (6).

5. Moteur à courant continu sans collecteur selon les revendications 1 à 4, caractérisé en ce que le circuit de commande comporte, afin de permettre un réglage de la vitesse de rotation sur une gamme d'environ 1 : 10, un circuit de réglage supplémentaire au moyen duquel la tension d'alimentation aux bornes des deux condensateurs de charge (3) de la source de tension continue (2) alimentée par l'intermédiaire d'un appareil d'alimentation (1) peut être réglée par découpage de phase de la tension alternative secondaire du transformateur réseau au moyen de deux triacs (figure 2).

6. Moteur à courant continu sans collecteur selon les revendications 1 à 5, caractérisé en ce que le circuit de commande contient un circuit de décharge (17) qui, dans le cas d'une réduction de la vitesse de rotation de consigne du moteur, décharge en un bref intervalle de temps les condensateurs de charge (3) de la source de tension continue (2).

7. Moteur à courant continu sans collecteur selon les revendications 1 à 6, caractérisé en ce que le circuit de commande contient un microprocesseur (10) qui, sur la base de ladite impulsion de la position du rotor (9), commande la commutation des brins d'enroulement (7, 8), la décharge du condensateur de charge (3) de la source de courant continu (2), la régulation de la tension d'alimentation, la régulation de l'angle du flux de courant des impulsions du moteur ainsi que le débranchement du moteur (6) dans le cas d'une surcharge.

8. Moteur à courant continu sans collecteur selon les revendications 1 à 7, caractérisé en ce que les compteurs de l'organe de réglage du circuit de réglage sont formés par des registres ou par des minuteries du microprocesseur (10).

Fig.1

220V~

±5V

8048

0 089 577

Fig.2

Fig.3

Fig.4

Fig.5

Fig.6

Fig.7

4

Fig. 8

Fig.9